# EUROPÄISCHE PATENTSCHRIFT

(11) **EP 0 972 451 B1**
(45) Veröffentlichungstag und Bekanntmachung des Hinweises auf die Patenterteilung: **21.01.2004**
(21) Anmeldenummer: 99103214.5
(22) Anmeldetag: 18.02.1999
(51) Int. Cl.: A23K 1/16, A23K 1/18

(54) **Öl und L-Carnitin enthaltende Futtermittel-Zubereitung**
Oil- and carnitine-containing feed composition
Composition alimentaire pour animaux contenant de l'huile et de la carnitine

(30) Priorität: 14.07.1998 DE 19831575
(43) Veröffentlichungstag der Anmeldung: 19.01.2000
(73) Patentinhaber: MFE Marienfelde GmbH Unternehmen für Ernährung, 91154 Roth bei Nürnberg (DE)
(72) Erfinder: Kohnke, Boris, 25474 Bönningstedt (DE)
(74) Vertreter: Koepe, Gerd L., Dipl.-Chem.

(56) Entgegenhaltungen:
- EP-A- 0 092 076
- EP-A- 0 265 772
- WO-A-89/10065
- WO-A-90/11753
- BE-A- 876 561
- DE-A- 19 527 281
- FR-A- 2 735 331
- EP BRASS: "Supplemental carnitine and exercise", AMERICAN JOURNAL OF CLINICAL NUTRITION, USA, , Band 2000, Nr. 72 S, Seiten 618S - 623S
- DATABASE DISSERTATIONSDATENBANK, , DISSERTATIONSDATENBANK Nr. , FEHLEISEN B: "Einsatz von Carnitin im training von Sportpferden", April 1997
- DATABASE TIERMEDIZIN, , TIERMEDIZIN Nr. , IBEN C, MOSCHITZ E, FEHLEISEN B: "Untersuchung des Effektes oraler L-Carnitingaben auf die Herzfrequenz und einige Blutparameter beim Vielseitigkeitspferd im Training ", 08. Januar 1999
- DATABASE TIERMEDIZIN, , TIERMEDIZIN Nr. , IBEN C: "Einsatz von Carnitin beim Schlittenhund", 27. Maerz 1998

## Beschreibung

Die vorliegende Erfindung betrifft eine ein Öl oder mehrere Öle enthaltende Futtermittel-Zubereitung .

Im Bereich der Fütterung von Tieren, insbesondere von solchen Tieren, die starker körperlicher Langzeit-Beanspruchung ausgesetzt werden (z. B. Reitpferde, Schlittenhunde), ist es bekannt, daß vegetabile Öle besonders gute Energielieferanten sind. Vegetabile Öle, in denen Glycerinester ungesättigter Fettsäuren vorkommen oder gar vorherrschen, sind darüber hinaus bekannt dafür, für ein gesundes, artgerechtes Fell bzw, eine gesunde Haut zu sorgen und den Tieren die Energie für hohe Aktivität und Mobilität zu liefern, und sind daher in Öl enthaltenden Futtermittel-Zubereitungen bevorzugt.

Eine Muskelzelle im Säugerorganismus gewinnt Energie durch Verstoffwechselung von Kohlenhydraten und Fetten bzw. den aus letzteren freigesetzten Fettsäuren. Dabei wird der Energiebedarf für kurzzeitige Aktivität in der Zelle zum großen Teil durch "Verbrennung" von Kohlenhydraten (z. B. Glucose) bereitgestellt. Jedoch wird in der Skelettmuskulatur immerhin ca. 50 % des Energiebedarfs aus Fetten gewonnen.

Ausdauernde "Arbeit", wie sie beispielsweise der Herzmuskel bei der Kontraktion leisten muß, kann nur durch "Verbrennung" von Fetten/ Fettsäuren erreicht werden. Herzmuskelzellen decken > 70 % ihres Energiebedarfs durch Oxidation freier Fettsäuren.

Die direkte Verabreichung von Fetten, speziell pflanzlichen Ölen, im Futter zu Zwecken einer schnellen Energiesupplementierung wird jedoch nicht als brauchbarer Weg angesehen, dem Tierkörper Fette für die Verstoffwechselung zuzuführen. Zum einen besitzen manche Tierspezies nicht die physiologischen Voraussetzungen, um Fette in der für die Energiesupplementierung erforderlichen Menge zu metabolisieren: Pferde haben zum Beispiel keine Gallenblase und können Fette in größerer Menge nur dann verwerten, wenn sie langsam daran gewöhnt werden. Ungewohnte Fett- (beispielsweise Öl-) Gaben schädigen die Darmflora, und die Folgen sind Koliken, die durch die ungewohnten Fett-Mengen hervorgerufen werden. Daher wird von der direkten Verabreichung von Fetten im Futter abgeraten. Diese war jedoch wegen der hohen Energiedichte von Fetten erwünscht.

L-Carnitin [3-Hydroxy-4-(trimethylammonio-)buttersäurebetain], eine im Säugerkörper endogen aus L-Lysin und L-Methionin synthetisierbare oder über die Nahrung/das Futter aufnehmbare Substanz, hat die Aufgabe, Fette der Verbrennung in den Mitochondrien im Wege der sog. "Beta-Oxidation" zuzuführen. An den Carrier L-Carnitin gebundene langkettige Fettsäure-Reste können durch die innere Mitochondrien-Membran hindurchtreten und im Innern des Mitochondriums oxidativ verwertet werden. L-Carnitin (im Gegensatz zu dem Isomeren D-Carnitin, das eine unphysiologische Substanz ist) ist also essentiell für die Beta-Oxidation von Fetten, insbesondere für die Bereitstellung der notwendigen Energiereserven für die Ausdauerarbeit im Muskel, beispielsweise im Herzmuskel.

Die Druckschrift FR-A 2,735,331 betrifft einen Emährungskomplex, der dazu bestimmt ist, die Verdaubarkeit von Nährstoffen bei Jungtieren zu verbessern, indem die Aktivitäten der üblicherweise an der Verdauung beteiligten Enzyme (Lipasen, Proteasen) optimiert werden. Die aus einer ansäuernden Komponente und mehreren die Emulgierung fördernden Komponenten bestehende Zubereitung kann Carnitin enthalten.

Die Druckschrift WO 89/10065 offenbart ein Verfahren zur Erhöhung des Plasma-L-Camitin-Spiegels in domestizierten Hunden und Katzen durch prophylaktische Verabreichung einer L-Carnitin in einer Menge von 0,2 bis 2 g enthaltenden Nahrungsergänzung pro Tag.

Ein Nahrungsergänzungsmittel auf Basis eines Frucht- oder Gemüsesaftes, das mit L-Carnitin und essentiellen Fettsäuren angereicht wird, ist von DE 195 27 281 her bekannt.

Die Druckschrift EP-A 0 092 076 beschreibt eine ausschließlich aus speziellen Fetten mit bestimmten Längen der Fettsäure-Ketten bestehende Zubereitung zur oralen, parenteralen oder enteralen Ernährung für Kranke. Für die enterale oder parenterale Verabreichung bestimmte Zubereitungen können Carnitin enthalten. Die Zubereitungen werden in Form von Öl-in-Wasser-Zubereitungen mit Öl-Gehalten im Bereich von etwa 10 % verabreicht, bezogen auf die gesamte Zusammensetzung.

Überraschenderweise wurde nun gefunden, daß Futtermittel-Zubereitungen, die L-Carnitin und vegetabile Öle enthalten, eine ideales Mittel darstellen, um Tieren Öle als Lieferanten schnell verfügbarer Energie über das Futter zuzuführen, die gut verträglich sind, schneller resorbiert werden und direkt in schnell verfügbare Energie umgesetzt werden. Dies ist umso überraschender, als bekannt ist, daß eine orale Verabreichung von L-Carnitin erst mit ein- bis zweimonatigem Abstand zu der als Voraussetzung für die verbesserte Verstoffwechselung von Fetten (wie beispielsweise Ölen) zu sehenden Erhöhung des L-Carnitin-Gewebe-Spiegels (beispielsweise im Myocard) führt, während eine selbst kurzfristige Erhöhung des L-Carnitin-Plasma-Spiegels, wie sie der oralen Verabreichung von L-Carnitin folgt, die Verstoffwechselung von Fetten nicht verbessert.

Die Erfindung betrifft daher ein oder mehrere vegetabile(s) Öl(e) enthaltende flüssige Futtermittel-Zubereitungen, die in Form einer Wasser-in-ÖI-Emulsion umfassen:
50 bis 90 Gew.-%, bezogen auf das Gesamtgewicht der Zubereitung, eines vegetabilen Öles oder mehrerer vegetabiler Öle aus der Gruppe von Ölen mit > 70 Gew.-% ein- oder mehrfach ungesättigter Fettsäuren;
L-Carnitin;
gegebenenfalls weitere Wirk- und Hilfsstoffe; und
Wasser.

Bevorzugte Ausführungsformen derartiger Futtermittel-Zubereitungen ergeben sich aus den Unteransprüchen 2 bis 10.

Hauptkomponente, und zwar aus Sicht der Wirkung wie aus Sicht des Mengenanteils in der erfindungsgemäßen Futtermittel-Zubereitung, ist bzw. sind das bzw, die vegetabile(n) Öl(e). Die Ölkomponente kann aus einem Öl oder kann aus mehreren Ölen bestehen. Unter vegetabilen Ölen werden im Rahmen der vorliegenden Erfindung aus Pflanzen bzw. Pflanzenteilen erhältliche Öle, also bei Raumtemperatur flüssige Triacylglyceride, verstanden.

Die Öle, die in der Futtermittel-Zubereitung gemäß der vorliegenden Erfindung verwendet werden, sind gewählt aus vegetabilen Ölen aus der Gruppe von Ölen mit > 70 Gew.-% ein- oder mehrfach ungesättigter Fettsäuren. Die Fettsäure-Zusammensetzung der verwendeten Öle umfaßt also überwiegend Fettsäure-Reste im Triacylglycerid, die wenigstens eine C=C-Doppelbindung in der Alkylkette des Acyl-Restes enthalten. Dies sind beispielsweise Oleyol-Reste (18:1 (9); d. h. 18 C-Atome, eine C=C-Doppelbindung zwischen C-Atom 9 und 10), Linoloyl-Reste (18:2 (9, 12)) und/oder Linolenoyl-Reste (18:3 (9, 12, 15)). Derartige Öle werden erfindungsgemäß deswegen verwendet, weil sie besonders schnelle Energielieferanten sind und bei den Tieren keine Probleme hinsichtlich irgendwelcher Nebenwirkungen (Veränderung der Darmflora) auftreten. Darüber hinaus läßt sich eine Verbesserung der Haut bzw. des Felles feststellen.

Beispiele bevorzugter Futtermittel-Zubereitungen sind solche, die als Öl bzw. Öle eines oder mehrere aus der Gruppe Sonnenblumenöl [23/63/< 0,5], Sojaöl [21/53/8], Erdnußöl [41/35,5/0], Rapsöl [63/20/9], Sesamöl [42/44,5/0], Safloröl [12/78/0,5] und Leinöl [18/14/58] enthalten (vorstehend angegeben sind die Gehalte (in Gew.-% der Fettsäuren) an Oleyol-, Linoloyl- und Linolenoyl-Resten; nach H.D. Belitz et al., Lehrbuch der Lebensmittelchemie, 3. Auflage (1987), Springer-Verlag, Seite 525). Besonders bevorzugt sind Sonnenblumenöl, Sesamöl und/oder Leinöl als Ölkomponente, wobei besonders vorteilhafte Wirkungen erzielt werden. wenn eine Futtermittel-Zubereitung Leinöl als Ölkomponente enthält. Leinöl hat sich im Rahmen der Erfindung als besonders guter Energielieferant herausgestellt und nimmt auf den Stoffwechsel der Tiere, die Futtermittel-Zubereitungen mit Leinöl erhalten, einen besonders positiven Einfluß. Möglicherweise (ohne an diese These gebunden zu sein) hängt dies mit dem hohen Gehalt des Leinöls an mehrfach, insbesondere dreifach ungesättigten Fettsäure-Resten zusammen.

Das Öl oder die Öle, insbesondere Leinöl, sind in der erfindungsgemäßen Futtermittel-Zubereitung in einer Menge von 50 bis 90 Gew.-% enthalten, bevorzugt in einer Menge von 65 bis 85 Gew.-% , besonders bevorzugt in einer Menge von 75 bis 82 Gew.-% . Alle genannten Mengenangaben sind bezogen auf das Gesamtgewicht der Zubereitung. Futtermittel-Zubereitungen mit einem Öl oder mehreren Ölen in den vorstehend genannten Mengen haben als Energiesupplement des Tiers einen besonders guten Einfluß, sind gut verträglich und können zudem aus relativ preiswert erhältlichen Rohstoffen mit guten technologischen Eigenschaften hergestellt und zu einer lagerstabilen Futtermittel-Zubereitung verarbeitet werden.

Erfindungsgemäß umfaßt die Futtermittel-Zubereitung als zweite essentielle Komponente L-Carnitin. Dieses ist in einer bevorzugten Ausführungsform der Erfindung in einer Futtermittel-Zubereitung in einer Menge von 0,1 bis 10 Gew.-% enthalten, bevorzugt in einer Menge von 0,5 bis 7 Gew.-% , besonders bevorzugt in einer Menge von 0,8 bis 5 Gew.-% , jeweils bezogen auf das Gesamtgewicht der Zubereitung.

L-Carnitin in der erfindungsgemäßen Zubereitung führt überraschenderweise zu einer schnellen und in kurzer Zeit nach der Verabreichung beobachtbaren Resorption der Ölgabe, und es wird eine erhöhte Ausdauer des jeweiligen Tieres aufgrund der schnellen Umsetzung des Öls/der Öle in verwertbare Energie beobachtet. Weiter wurde überraschenderweise gefunden, daß sich Energiereserven nach starker Belastung schneller wieder regenerieren, und notwendige Erholungsphasen zwischen zwei Belastungsperioden verkürzen sich merklich. Ohne an eine These diesbezüglich gebunden zu sein, wird vermutet, daß dies darauf zurückzuführen ist, daß der unter Beteiligung der drei Cofaktoren Ascorbinsäure, Niacin und Pyridoxin sowie in Gegenwart von Fe²⁺ nur in bestimmten Organen des Säugerkörpers ablaufende, energieaufwendige Syntheseweg des L-Carnitins eingespart wird und die als Carrier essentielle Substanz durch schnellen Antransport an den Wirkort (Mitochondrienmembran) für den Transport von Acylgruppen durch die Membran für die Beta-Oxidation zur Verfügung steht.

Erfindungsgemäß liegt die Futtermittel-Zubereitung, die die vorgenannten Komponenten enthält, in flüssiger Form vor. Dabei ist es bevorzugt, daß neben den Ölen eine für die optimale Resorption des ionischen Betains L-Carnitin förderliche Menge an Wasser in der Zubereitung enthalten ist. Die Wassermenge kann im Bereich von 1 bis 20 Gew.-% liegen, bevorzugt im Bereich von 3 bis 10 Gew.-%, jeweils bezogen auf das Gesamtgewicht der Futtermittel-Zubereitung. Das Wasser enthält die in ionischer Form (SalzForm) vorliegenden Komponenten der Futtermittel-Zubereitung und fördert deren Resorption im Säugerkörper.

Erfindungsgemäß ist die gegenüber der Ölkomponente in geringerer Menge vorliegende wäßrige Komponente (einschließlich der darin enthaltenen Inhaltsstoffe wie beispielsweise L-Carnitin) in der mengenmäßig überwiegenden Ölphase emulgiert. Die Stabilität einer derartigen Wasser-in-Öl-Emulsion kann durch die Gegenwart eines oder mehrerer die Stabilität von Wasser-in-Öl-Emulsionen fördernder Substanzen verbessert oder auch über längere Zeit sichergestellt werden. Als Emulgatoren kommen beispielsweise allgemein solche in Betracht, die mit den anderen Komponenten verträglich sind und vom Säugerkörper vertragen werden. Dies sind beispielsweise, ohne darauf beschränkt zu sein, Polyglycerinester der Speisefettsäuren. In besonders bevorzugten Futtermittel-Zubereitungen gemäß der Erfindung sind beispielsweise die vorgenannten Emulgatoren in einer Menge von 0,1 bis 10 Gew.-% zugegen, bezogen auf das Gesamtgewicht der Zubereitung, am meisten bevorzugt in einer Menge von 1 bis 8 Gew.-% . Nicht nur reicht diese Menge zur stabilen Emulgierung der wäßrigen Phase in der Ölphase vollständig aus, sondern es treten auch keine Nebenwirkungen mit übergroßen Mengen an Emulgator auf.

Erfindungsgemäß können die Futtermittel-Zubereitungen noch weitere Komponenten als Wirkstoffe und/oder Hilfsstoffe umfassen. Solche Wirkstoffe können beispielsweise von Ölen verschiedene, Energie liefernde Substanzen, physiologisch wirksame Substanzen wie beispielsweise Sauerstoff für die Verbrennung liefernde Stoffe oder gefäßerweiternd wirkende Stoffe und/oder Konservierungsstoffe sein, wobei diese Stoffe jeweils allein oder in Kombination miteinander in den Futtermittel-Zubereitungen vorliegen können. Hilfsstoffe können beispielsweise Aromastoffe, Geschmacksstoffe. Farbstoffe oder Konservierungsstoffe für eine oder beide Phasen der Wasser-in-Öl-Emulsion sein.

In einer bevorzugten Ausführungsform der Erfindung werden der Futtermittel-Zubereitung ein oder mehrere Konservierungsstoffe zugesetzt. Im Hinblick auf die beiden hinsichtlich ihrer Hydrophilie bzw. Lipophilie unterschiedlichen Phasen können bevorzugt mehrere, hinsichtlich ihrer Natur ebenfalls unterschiedliche Konservierungsstoffe zugesetzt werden. Beispiele für lipophile Stoffe, die konservierende Eigenschaften haben. sind Tocopherole (Vitamin E) und ihre Derivate, insbesondere Tocopherolacetat. Diese können mit Antioxidationsmitteln gegen Oxidation geschützt werden, beispielsweise mit Gallensäure-Fettalkoholestern wie beispielsweise Dodecylgallat. Diese Substanzen werden in Mengen von bevorzugt 0,001 bis 0,5 Gew.-% eingesetzt, noch mehr bevorzugt in Mengen von 0,01 bis 0,1 Gew.-%, jeweils bezogen auf das Gesamtgewicht der Zubereitung. Weiter können die Futtermittel-Zubereitungen Vitamine wie Ascorbinsäure oder Vitamin A enthalten. Ascorbinsäure beugt ebenfalls einer Oxidation vor und eignet sich zudem auch zur Regeneration des Tocopherolacetats. In einem Beispiel einer erfindungsgemäßen Futtermittel-Zubereitung liegt der Gehalt an Ascorbinsäure im Bereich von 0,001 bis 0,1 Gew.-%, bezogen auf das Gesamtgewicht der Zubereitung.

Zur Konservierung der wäßrigen Phase können den Futtermittel-Zubereitungen auch (gegebenenfalls zusätzlich zu den bereits genannten Stoffen) wasserlösliche Konservierungsmittel zugesetzt werden. Beispiele sind Sorbinsäure und ihre Derivate, beispielsweise ihre Alkalimetallsalze wie z. B. das Kaliumsalz. Kaliumsorbat kann beispielsweise in einer Menge im Bereich von 0,001 bis 1 Gew.-%, bevorzugt in einer Menge von 0,005 bis 0,5 Gew.-% zugegen sein, bezogen auf das Gesamtgewicht der Futtermittel-Zubereitung.

Weiter können in der Futtermittel-Zubereitung von Ölen verschiedene Energie liefernde Substanzen zugegen sein. Solche sind beispielsweise Kohlenhydrate, besonders bevorzugt Kohlenhydrate, die schnell unter Bereitstellung weiterer Energiereserven verstoffwechselt werden können. Hierfür kommen - auch aus Gründen einer besseren Akzeptanz des Futtermittels - ein oder mehrere Zucker wie beispielsweise Traubenzucker (Glucose) infrage. Diese sind - wenn vorhanden - in Mengen von insgesamt 0,05 bis 5 Gew.-% zugegen, bevorzugt in Mengen von 0,1 bis 1 Gew.-%, bezogen auf das Gesamtgewicht der Zubereitung.

Weitere potentielle Komponenten der erfindungsgemäßen Futtermittel-Zubereitungen können mehrwertige Alkohole sein, bevorzugt fünf- oder sechswertige Alkohole. Einer besonders bevorzugten Ausführungsform entsprechend können dies beispielsweise cyclische Zuckeralkohole, beispielsweise sechswertige Cyclite wie Inosite sein. Aus der Gruppe der sechswertigen Cyclite sind Inosite, besonders bevorzugt myo-Inosit, verwendbar; letzteres ist bekannt für seine Wirkung, die Sauerstoffabgabe aus dem Hämoglobin zu beschleunigen und damit für eine schnellere Bereitstellung des für die "Verbrennung" der Öle erforderlichen Sauerstoffs im Organismus zu sorgen. Gerade diese Wirkung ist im Rahmen der Erfindung besonders angestrebt, weswegen ein Gehalt an myo-Inosit in der Futtermittel-Zubereitung von besonderem Vorteil ist. Der Gehalt ist nicht besonders kritisch, kann jedoch bevorzugt bei 0,1 bis 5 Gew.-% liegen, besonders bevorzugt bei 0,5 bis 5 Gew.-%, bezogen auf das Gesamtgewicht der Futtermittel-Zubereitung.

Weiter bevorzugt können die Futtermittel-Zubereitungen der Erfindung Cholin enthalten. Dieses liegt besonders bevorzugt in Form von Cholinchlorid vor und wirkt gefäßerweiternd, blutdrucksenkend, regelt die Darmtätigkeit und vermindert Fettablagerungen im Organismus, mit denen aufgrund der erhöhten Fettgaben sonst zu rechnen wäre. Insbesondere Fettablagerungen in der Leber wird mit Cholinchlorid vorgebeugt. Bevorzugt ist Cholinchlorid in einer Menge von 0,1 bis 5 Gew.-% zugegen, besonders bevorzugt in einer Menge von 0,5 bis 2 Gew.-%, bezogen auf das Gesamtgewicht der Zubereitung.

Die Futtermittel-Zubereitungen gemäß der Erfindung können an alle Säuger verfüttert werden. Beispiele sind Reitpferde, Schlittenhunde, Hunde, die an Rennen teilnehmen (z. B. Windhunde), usw.. Eine besondere Verwendung der Futtermittel-Zubereitungen der Erfindung liegt also bei der Verabreichung an solche Tiere, die Belastungen, insbesondere längeren Belastungen wie beispielsweise Rennen, Turnieren, Daueranstrengungen usw. ausgesetzt sind.

Eine Verfütterung kann in der Weise erfolgen, daß die in Form der Wasser-in-Öl-Emulsion vorliegende Zubereitung an das jeweilige Tier getrennt von der üblichen Nahrung oder Kraftnahrung verfüttert wird, also als flüssige "Extra-Gabe", oder der für das jeweilige Tier vorgesehenen Futter-Ration beigemischt wird. Im Hinblick auf die genaue Kontrolle der Aufnahme hat sich die vom übrigen Futter gesonderte Abgabe bewährt. Dabei werden die besten Ergebnisse hinsichtlich einer Steigerung der Ausdauer-Leistung bei möglichst gleichmäßiger Verteilung der Gaben über einen Tag erzielt. Beispielsweise kann an ein Reitpferd eine Dosis im Bereich von 10 bis 100 ml, bevorzugt von 30 bis 60 ml, der Zubereitung pro Tag verfüttert werden, verteilt auf zwei oder mehr Mahlzeiten. Bei kleineren Tieren wie Hunden sind die Mengen entsprechend dem Körpergewicht der Tiere zu verringern und liegen beispielsweise bei 1 bis 20 ml, bevorzugt bei 3 bis 10 ml, verteilt über zwei oder mehr Mahlzeiten des Tages.

Die Erfindung wird durch die folgenden Beispiele näher erläutert.

### Beispiel 1

| **Inhaltsstoff** | **Anteil** (Gew.-%) |
|---|---|
| Leinöl | 81,98 |
| Wasser | 6,0 |
| Polyglycerinester der Speisefettsäuren | 4.5 |
| L-Carnitin | 1,5 |
| Cholinchlorid | 1.5 |
| Aroma | 1,0 |
| Vitamin-Vormischung | 1,0 |
| Glycerin | 1,0 |
| myo-Inosit | 0,8 |
| Glucose | 0,5 |
| Kaliumsorbat | 0,2 |
| Ascorbinsäure | 0,01 |
| Dodecylgallat | 0,01 |

### Beispiel 2

| **Inhaltsstoff** | **Anteil** (Gew.-%) |
|---|---|
| Sonnenblumenöl | 79.28 |
| Wasser | 7,0 |
| Polyglycerinester der Speisefettsäuren | 4,0 |
| L-Carnitin | 2,5 |
| Cholinchlorid | 1,0 |
| Aroma | 1.5 |
| Vitamin-Vormischung | 1,5 |
| myo-Inosit | 1,0 |
| Glucose | 2,0 |
| Kaliumsorbat | 0.2 |
| Ascorbinsäure | 0,01 |
| Dodecylgallat | 0.01 |

### Beispiel 3

| **Inhaltsstoff** | **Anteil** (Gew.-%) |
|---|---|
| Sojaöl | 71,17 |
| Wasser | 9.0 |
| Polyglycerinester der Speisefettsäuren | 5,5 |
| L-Carnitin | 3.5 |
| Cholinchlorid | 0,5 |
| Aroma | 1,0 |
| Vitamin-Vormischung | 1,0 |
| Glycerin | 1,5 |
| myo-Inosit | 1,5 |
| Fructose | 5,0 |
| Kaliumbenzoat | 0,3 |
| Ascorbinsäure | 0,02 |
| Dodecylgallat | 0,01 |

## Patentansprüche

1. Ein oder mehrere vegetabile(s) Öl(e) enthaltende flüssige Futtermittel-Zubereitung, umfassend in Form einer Wasser-in-Öl-Emulsion
- 50 bis 90 Gew.-%, bezogen auf das Gesamtgewicht der Zubereitung, eines vegetabilen Öles oder mehrerer vegetabiler Öle aus der Gruppe von Ölen mit > 70 Gew.-% ein- oder mehrfach ungesättigter Fettsäuren;
- L-Carnitin;
- gegebenenfalls weitere Wirk- und Hilfsstoffe; und
- Wasser.

2. Futtermittel-Zubereitung nach Anspruch 1, umfassend als Öl(e) ein oder mehrere Öle aus der Gruppe Sonnenblumenöl, Sojaöl, Erdnußöl, Rapsöl, Sesamöl, Safloröl und Leinöl, bevorzugt Sonnenblumenöl, Sesamöl und Leinöl.

3. Futtermittel-Zubereitung nach Anspruch 1 oder Anspruch 2, umfassend ein oder mehrere vegetabile(s) Öl(e) in einer Menge von 65 bis 85 Gew.-%, besonders bevorzugt in einer Menge von 75 bis 82 Gew.-%, jeweils bezogen auf das Gesamtgewicht der Zubereitung.

4. Futtermittel-Zubereitung nach einem der Ansprüche 1 bis 3, umfassend L-Carnitin in einer Menge von 0,1 bis 10 Gew.-%, bevorzugt in einer Menge von 0,5 bis 7 Gew.- %, besonders bevorzugt in einer Menge von 0,8 bis 5 Gew.-% , jeweils bezogen auf das Gesamtgewicht der Zubereitung.

5. Futtermittel-Zubereitung nach einem der Ansprüche 1 bis 4, umfassend zusätzlich einen oder mehrere Konservierungsstoffe, bevorzugt solche aus der Gruppe Tocopherol und seine Derivate, Ascorbinsäure und ihre Derivate, Sorbinsäure und ihre Derivate und Gallensäureester mit Fettalkoholen.

6. Futtermittel-Zubereitung nach Anspruch 5, umfassend einen oder mehrere Konservierungsstoffe aus der Gruppe Tocopherolacetat, Ascorbinsäure und ihre Salze, Sorbinsäure und ihre Salze und C₈- bis C₁₈- (bevorzugt Dodecyl-) Gallat.

7. Futtermittel-Zubereitung nach einem der Ansprüche 1 bis 6, umfassend von Ölen verschiedene, Energie liefernde Substanzen, bevorzugt ein oder mehrere Kohlenhydrat(e), noch mehr bevorzugt in Mengen von 0,05 bis 5 Gew.-% , weiter bevorzugt in Mengen von 0,1 bis 1 Gew.-% , bezogen auf das Gesamtgewicht der Zubereitung.

8. Futtermittel-Zubereitung nach einem der Ansprüche 1 bis 7, umfassend einen oder mehrere mehrwertige(n) Alkohol(e), bevorzugt fünf- oder sechswertige Alkohole, noch mehr bevorzugt aus der Gruppe der Zuckeralkohole, noch mehr bevorzugt Inosite, am meisten bevorzugt eine myo-Inosit enthaltende Zuckeralkohol-Mischung.

9. Futtermittel-Zubereitung nach einem der Ansprüche 1 bis 8, umfassend Cholinchlorid in einer Menge von 0,1 bis 5 Gew.-%, bevorzugt in einer Menge von 0,5 bis 2 Gew.-%, jeweils bezogen auf das Gesamtgewicht der Zubereitung.

10. Futtermittel-Zubereitung nach einem der Ansprüche 1 bis 9, umfassend einen Emulgator, bevorzugt Polyglycerinester der Speisefettsäuren, noch mehr bevorzugt in einer Menge von 0,1 bis 10 Gew.-% , am meisten bevorzugt in einer Menge von 1 bis 8 Gew.-% , bezogen auf das Gesamtgewicht der Zubereitung.

## Claims

1. A liquid feed stuff composition containing one or more vegetable oil(s), said composition comprising, in the form of a water-in-oil emulsion,
- 50 to 90 % by weight, based on the total weight of the composition, of one vegetable oil or of several vegetable oils selected from the group of oils having > 70 % by weight of singly or multiply unsaturated fatty acids;
- L-carnitine;
- optionally additional effective agents and auxiliary agents; and
- water.

2. The feed stuff composition of claim 1, comprising, as the oil(s), one or several oil(s) selected from the group consisting of sunflower oil, soja oil, peanut oil, rape oil, sesame oil, safflor oil and linseed oil, preferably sunflower oil, sesame oil and linseed oil.

3. The feed stuff composition of claim 1 or claim 2, comprising one or several vegetable oil(s) in an amount of from 65 to 85 % by weight, particularly preferably in an amount of from 75 to 82 % by weight, each based on the total weight of the composition.

4. The feed stuff composition of any of the claims 1 to 3, comprising L-carnitine in an amount of from 0,1 to 10 % by weight, preferably in an amount of from 0.5 to 7 % by weight, particularly preferably in an amount of from 0.8 to 5 % by weight, each based on the total weight of the composition.

5. The feed stuff composition of any of the claims 1 to 4, additionally comprising one or several preservatives, preferably those selected from the group consisting of tocopherol and its derivatives, ascorbic acid and its derivatives, sorbic acid and its derivatives and gallic acid esters with fatty alcohols.

6. The feed stuff composition of claim 5, comprising one or several preservative(s) selected from the group consisting of tocopherol acetate, ascorbic acid and its salts, sorbic acid and its salts and C₈- to C₁₈-alkyl (preferably dodecyl) gallate.

7. The feed stuff composition of any of the claims 1 to 6, comprising energy-delivering substances different from oils, preferably one or several carbohydrate(s), more preferably in amounts of from 0.05 to 5 % by weight, even more preferably in amounts of from 0.1 to 1 % by weight, based on the total weight of the composition.

8. The feed stuff composition of any of the claims 1 to 7, comprising one or several polyhydroxy alcohol(s), preferably pentahydroxy or hexahydroxy alcohols, more preferably selected from the group of sugar alcohols, even more preferably inosites, most preferably a sugar alcohol mixture containing myo-inosite.

9. The feed stuff composition of any of the claims 1 to 8, comprising choline chloride in an amount of from 0.1 to 5 % by weight, preferably in an amount of from 0.5 to 2 % by weight, each based on the total weight of the composition.

10. The feed stuff composition of any of the claims 1 to 9, comprising an emulsifying agent, preferably polyglycerol ester(s) of food fatty acid(s), even more preferably in an amount of from 0.1 to 10 % by weight, most preferably in an amount of from 1 to 8% by weight, based on the total weight of the composition.

## Revendications

1. Préparation alimentaire liquide pour animaux, contenant une ou plusieurs huile(s) végétale(s), comprenant, sous la forme d'une émulsion eau dans l'huile :
- de 50 à 90 % en poids, par rapport au poids total de la préparation, d'une huile végétale ou de plusieurs huiles végétales choisies dans le groupe des huiles ayant plus de 70 % en poids d'acides gras à une ou plusieurs insaturations;
- de la L-carnitine ;
- le cas échéant, d'autres additifs ou adjuvants ; et
- de l'eau.

2. Préparation alimentaire pour animaux selon la revendication 1, comprenant comme huile(s) une ou plusieurs huiles choisies dans le groupe constitué par l'huile de tournesol, l'huile de soja, l'huile d'arachide, l'huile de colza, l'huile de sésame, l'huile de carthame, l'huile de lin, et de préférence de l'huile de tournesol, de l'huile de sésame et de l'huile de lin.

3. Préparation alimentaire pour animaux selon la revendication 1 ou la revendication 2, comprenant une ou plusieurs huiles végétales en une quantité allant de 65 à 85 % en poids, de façon particulièrement préférée en une quantité allant de 75 à 82 % en poids, respectivement par rapport au poids total de la préparation.

4. Préparation alimentaire pour animaux selon l'une des revendications 1 à 3, comprenant de la L-carnitine en une quantité allant de 0,1 à 10 % en poids, de préférence en une quantité allant de 0,5 à 7 % en poids, de façon particulièrement préférée en une quantité allant de 0,8 à 5 % en poids, respectivement par rapport au poids total de la préparation.

5. Préparation alimentaire pour animaux selon l'une des revendications 1 à 4, comprenant en outre un ou plusieurs conservateurs, de préférence choisis dans le groupe constitué par le tocophérol et ses dérivés, l'acide ascorbique et ses dérivés, l'acide sorbique et ses dérivés et les esters de l'acide biliaire et d'alcools gras.

6. Préparation alimentaire pour animaux selon la revendication 5, comprenant un ou plusieurs conservateurs choisis dans le groupe constitué par l'acétate de tocophérol, l'acide ascorbique et ses sels, l'acide sorbique et ses sels, et les gallates en C₈- à C₁₈-, de préférence de dodécyle.

7. Préparation alimentaire pour animaux selon l'une des revendications 1 à 6, comprenant différentes substances, apportant de l'énergie, provenant d'huiles, de préférence un ou plusieurs glucides (ou hydrates de carbone), plus préférentiellement en des quantités allant de 0,05 à 5 % en poids, plus préférentiellement encore en des quantités allant de 0,1 à 1 % en poids, par rapport au poids total de la préparation.

8. Préparation alimentaire pour animaux selon l'une des revendications 1 à 7, comprenant un ou plusieurs polyols, de préférence des penta- ou hexa-alcools, plus préférentiellement choisis dans le groupe des sucres alcools, encore plus préférentiellement de l'inositol, en particulier un mélange de sucres alcools contenant du myo-inositol.

9. Préparation alimentaire pour animaux selon l'une des revendications 1 à 8, comprenant du chlorure de choline en une quantité allant de 0,1 à 5 % en poids, de préférence en une quantité allant de 0,5 à 2 % en poids, respectivement par rapport au poids total de la préparation.

10. Préparation alimentaire pour animaux selon l'une des revendications 1 à 9, comprenant un émulsifiant, de préférence un polyester de glycérol et d'acides gras alimentaires, plus préférentiellement en une quantité allant de 0,1 à 10 % en poids, en particulier en une quantité allant de 1 à 8 % en poids, par rapport au poids total de la préparation.
